(19) Europäisches Patentamt / European Patent Office / Office européen des brevets

(11) **EP 4 145 301 A1**

(12) **EUROPEAN PATENT APPLICATION**
published in accordance with Art. 153(4) EPC

(43) Date of publication:
**08.03.2023 Bulletin 2023/10**

(21) Application number: **20943188.1**

(22) Date of filing: **30.06.2020**

(51) International Patent Classification (IPC):
**G06F 16/36** $^{(2019.01)}$

(52) Cooperative Patent Classification (CPC):
**G06F 16/36**

(86) International application number:
**PCT/CN2020/099505**

(87) International publication number:
**WO 2022/000325 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **ZOU, Wenchao
Shanghai 123200 (CN)**
• **WANG, Haifeng
Shanghai 201105 (CN)**
• **MARTINEZ CANEDO, Arquimedes
Plainsboro New Jersey 08536 (US)**

(74) Representative: **Isarpatent
Patent- und Rechtsanwälte Barth
Charles Hassa Peckmann & Partner mbB
Friedrichstrasse 31
80801 München (DE)**

(54) **SEMANTIC-BASED CAUSAL EVENT PROBABILITY ANALYSIS METHOD, APPARATUS AND SYSTEM**

(57)     A semantic-based causal event probability analysis method, apparatus and system. The method comprises the following steps: S1, according to user needs and on the basis of a cause event template and an effect event template, generating at least one cause event instance and a plurality of corresponding effect event instances thereof, and matching each cause event instance or effect event instance to a parent node, wherein the cause event instance or the effect event instance comprises a plurality of entities and mutual relationships between the entities; and S2, calculating the probability of a cause event instance or effect event instance having a common parent node. The method has higher efficiency and is more accurate in the logic for calculating a causal event probability.

FIG. 2

## Description

## Technical Field

The present invention relates to the field of digitization, and in particular to a semantic-based causal event probability analysis method, apparatus, and system.

## Background Art

In many applications, knowledge graphs provide the basis for semantic reasoning. However, knowledge graphs are now not configured for causal reasoning due to disadvantages of semantic correlation, dialogs from a semantic space to a probability space, and infeasibility of enumerating events.

Specifically, regarding the disadvantages of semantic correlation, it is now generally popular to utilize semantic correlation to describe the correlation between a plurality of entities, such as a bolt, assembly, and a nut. Such a description only describes a semantic relationship, but cannot handle a probabilistic relationship.

Regarding the dialogs from the semantic space to the probability space, a real-world system has many probabilistic relationships to describe different aspects of the system, such as event causes. For example, high temperature of an engine of a vehicle can be caused by lack of lubricating oil or high ambient temperature. Depending on the real cause of the high temperature of the engine, the system needs to have different responses, that is, triggering a low oil alarm or turning on the engine fan. Determination of causality has not been completed in a knowledge graph. Therefore, event causality should be switched from a semantic relationship to a probabilistic relationship, and a connection between events represents a probability of one event causing another.

Regarding the infeasibility of enumerating events, it is impossible to enumerate all events or build a complete model to describe the entire system, because there are always new entities or some exceptions or random situations. Therefore, a single event cannot be described with a fixed description, for example, "robot 1 grabs object 1", "robot 2 grabs object 2", or "robot 1 grabs object 1 and places it on table 1". Enumerating all events is not feasible for real systems.

## Summary of the Invention

A first aspect of the present invention provides a semantic-based causal event probability analysis method, including the following steps: S1. generating at least one cause event instance and a plurality of corresponding effect event instances thereof according to user requirements and based on a cause event template and an effect event template, and assigning each cause event instance or effect event instance to a parent node, where the cause event instance or the effect event instance includes a plurality of entities and a mutual relationship between the entities; and S2. calculating a probability of a cause event instance or an effect event instance having a common parent node, where a probability that a first cause event instance causes a first effect event instance is:

$$P\big(RE1(R)\big|CE1(C)\big) = \frac{P\big(CE1(R)\big|RE1(C)\big) \cdot P\big(RE1(R)\big)}{P\big(CE1(C)\big)}$$

where $P(CE1(R)|RE1(C))$ represents a probability of the first cause event occurring when the first effect event occurs, $P(RE1(R))$ represents a probability of the first effect event occurring among all effect events, and $P(CE1(C))$ represents a probability of the first cause event occurring among all cause events.

Further, step S1 further includes the following step: removing instances having no common parent node.

Further, step S1 further includes the following step: extracting a plurality of entities from a knowledge base to generate the at least one cause event instance and the plurality of corresponding effect event instances thereof and to form a knowledge graph according to the user requirements and based on the cause event template and the effect event template, and corresponding the plurality of entities of each cause event instance or effect event instance to the parent node, where the cause event instance or the effect event instance includes the plurality of entities and the mutual relationship between the entities.

Further, entities of the cause event template include an initial state, an end state, a material relationship, and a material.

Further, entities of the effect event template include an application program, a function module, an execution apparatus, a project, and a module.

Further, step S2 further includes the following steps: classifying all cause event instances and effect event instances.

A second aspect of the present invention provides a semantic-based causal event probability analysis apparatus, including: a generation apparatus for generating at least one cause event instance and a plurality of corresponding effect event instances thereof according to user requirements and based on a cause event template and an effect event template, and assigning each cause event instance or effect event instance to a parent node, where the cause event instance or the effect event instance includes a plurality of entities and a mutual relationship between the entities; and a calculation apparatus for calculating a probability of a cause event instance or an effect event instance having a common parent node, where a probability that a first cause event instance causes a first effect event instance is:

$$P\big(RE1(R)\big|CE1(C)\big) = \frac{P\big(CE1(R)\big|RE1(C)\big) \cdot P\big(RE1(R)\big)}{P\big(CE1(C)\big)}$$

where $P\,(CE1\,(R)\,|\,RE1\,(C)\,)$ represents a probability of the first cause event occurring when the first effect event occurs, $P(RE1(R))$ represents a probability of the first effect event occurring among all effect events, and $P(CE1(C))$ represents a probability of the first cause event occurring among all cause events.

Further, the generation apparatus is further configured to: remove instances having no common parent node.

Further, the generation apparatus is further configured to: extract a plurality of entities from a knowledge base to generate the at least one cause event instance and the plurality of corresponding effect event instances thereof and to form a knowledge graph according to the user requirements and based on the cause event template and the effect event template, and correspond the plurality of entities of each cause event instance or effect event instance to the parent node, where the cause event instance or the effect event instance includes the plurality of entities and the mutual relationship between the entities.

Further, entities of the cause event template include an initial state, an end state, a material relationship, and a material.

Further, entities of the effect event template include an application program, a function module, an execution apparatus, a project, and a module.

Further, the calculation apparatus is further configured to: classify all cause event instances and effect event instances.

A third aspect of the present invention provides a semantic-based causal event probability analysis system, including: a processor; and a memory coupled to the processor, where the memory stores instructions that, when executed by the processor, cause the electronic device to perform the actions including: S1. generating at least one cause event instance and a plurality of corresponding effect event instances thereof according to user requirements and based on a cause event template and an effect event template, and assigning each cause event instance or effect event instance to a parent node, where the cause event instance or the effect event instance includes a plurality of entities and a mutual relationship between the entities; and S2. calculating a probability of a cause event instance or an effect event instance having a common parent node, where a probability that a first cause event instance causes a first effect event instance is:

$$P\big(RE1(R)\big|CE1(C)\big) = \frac{P\big(CE1(R)\big|RE1(C)\big) \cdot P\big(RE1(R)\big)}{P\big(CE1(C)\big)}$$

where $P\,(CE1\,(R)\,|\,RE1\,(C)\,)$ represents a probability of the first cause event occurring when the first effect event occurs, $P(RE1(R))$ represents a probability of the first effect event occurring among all effect events, and $P(CE1(C))$ represents a probability of the first cause event occurring among all cause events.

A fourth aspect of the present invention provides a computer program product tangibly stored on a computer-readable medium and including computer executable instructions that, when executed, cause at least one processor to perform the method according to the first aspect of the present invention.

A fifth aspect of the present invention provides a computer-readable medium storing computer executable instructions that, when executed, cause at least one processor to perform the method according to the first aspect of the present invention.

The present invention can reuse a dynamic semantic description of entities and their mutual relationship to automatically generate events and their causality, which reduces costs compared to generating a completely different causality in a network alone.

In the present invention, causality estimation based on an existing semantic description is also more efficient. Because both description methods use the same data set, memory requirements are lowered.

The semantic-based causal event probability analysis mechanism provided in the present invention converts a static entity relationship into a causal probability, which represents a probability that a specific cause event causes a specific effect event. Causality is directly converted from the semantic description. Therefore, the present invention can convert all existing semantic networks into causal event networks.

**Brief Description of the Drawings**

FIG. 1 is a method flowchart of a semantic-based causal event probability analysis method according to a specific embodiment of the present invention;

FIG. 2 is a schematic structural diagram of a cause event template and an effect event template according to a specific embodiment of the present invention;

FIG. 3 is a schematic structural diagram of a cause event instance and an effect event instance according to a specific embodiment of the present invention; and

FIG. 4 is a schematic diagram of calculating an event causal probability relationship according to a specific embodiment of the present invention.

**Detailed Description of Embodiments**

Specific embodiments of the present invention are described below in conjunction with the accompanying drawings.

The present invention provides a semantic-based causal event probability analysis mechanism, which is a conversion mechanism from static semantic entity connection to event causality. The present invention converts a knowledge graph into a causal graph, and switches knowledge description from a relationship description to an event probability description. The present invention is applicable to all single-direction semantic relationships, where each pair of interconnected entities has only one single-direction relationship, that is, a directional graph. Every semantic network needs to include a schema or an ontology, including types and a relationship between the types.

The present invention can produce a probabilistic logical layer, which has events on top of a semantic layer. In the case that all semantic descriptions are maintained, a new probabilistic description is added to describe an existing system.

The present invention allows all events at the probabilistic logical layer to be connected with probabilities, which results in a probabilistic connection between events . A probability on each connection is converted into sampling of a newly input entity.

In the present invention, an entity is directly extracted from semantic entities and a relationship therebetween.

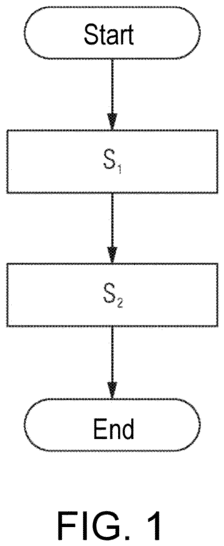

As shown in FIG. 1, a first aspect of the present invention provides a semantic-based causal event probability analysis method, including the following steps:

First, step S1 is performed, in which at least one cause event instance and a plurality of corresponding effect event instances thereof are generated according to user requirements and based on a cause event template and an effect event template, and each cause event instance or effect event instance is assigned to a parent node, where the cause event instance or the effect event instance includes a plurality of entities and a mutual relationship between the entities.

According to a specific embodiment of the present invention, a client's requirement is to analyze probabilities of three results caused by changing a stacking state of cartons and pallets to a side-by-side state of the cartons and the pallets . The three results are respectively: a grabbing program uses a first robot; the grabbing program includes a grabbing function block; and the grabbing program creates a grabbing automation project including a controller-controlled displacement calculation module and a controller-controlled gripper control module.

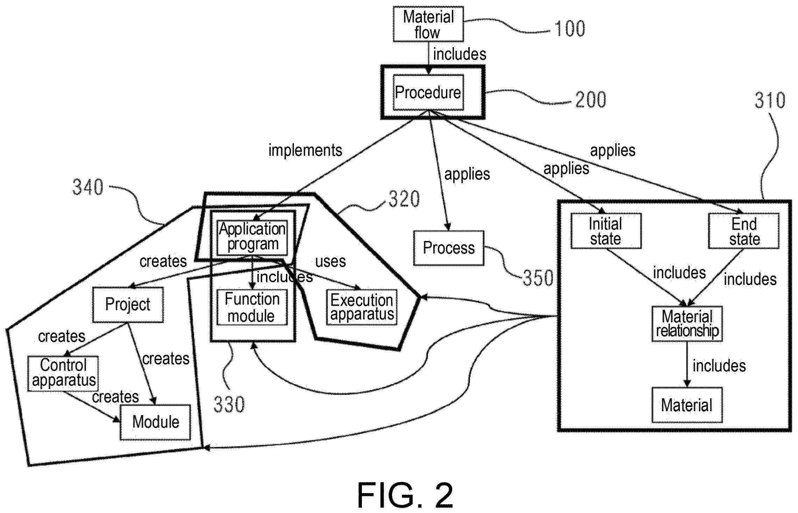

The above instances need to be generated based on templates. As shown in FIG. 2, entities of a cause event template 100 include an initial state, an end state, a material relationship, and a material; the initial state and the end state each include the material relationship; and the material relationship includes the material. Entities of a first effect event template 320 include an application program and an execution apparatus, where the execution apparatus is a robot, and a relationship between the application program and the robot is that the application program uses the robot. Entities of a second effect event template 330 include the application program and a function module, where the application program includes the function module. Entities of a third effect event template 340 include the application program, a project, an apparatus, and a module, where the apparatus is a controller, the application program creates the project, the project includes a control apparatus and the module, and the control apparatus controls the module. The cause event template 100, the first effect event template 320, the second effect event template 330, and the third effect event template 340 are under a common parent node template 200. This parent node template 200 is a procedure. The parent node template 200 includes the initial state and the end state in the cause event template 1, and applies a process 350 and is implemented by the application program. In addition, the common parent node template 200 is included under a material flow 100. FIG. 1 shows a causal event model based on a material flow.

Moreover, there are causal directions between the cause event template and the plurality of effect event templates, and the causal directions usually point from the cause event template to the plurality of effect event templates, respectively. The plurality of effect event templates may include the same entity.

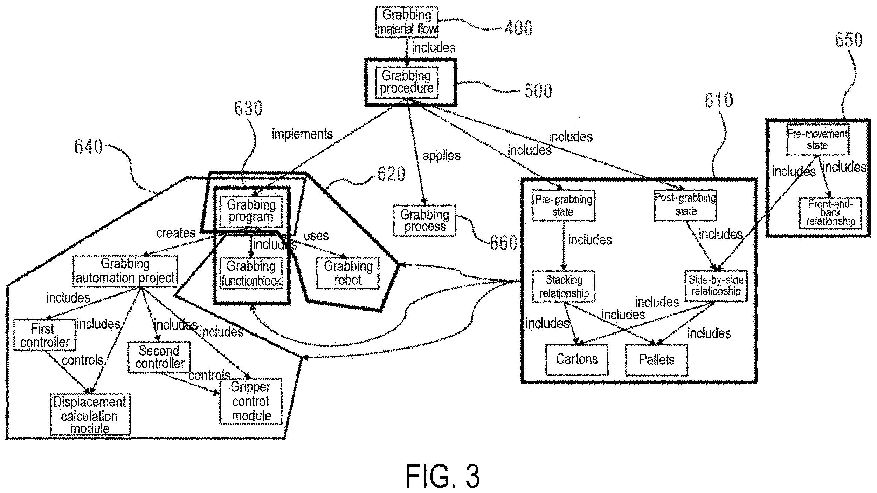

Therefore, as shown in FIG. 3, the at least one cause event instance and the plurality of corresponding effect event instances are generated according to the above-mentioned user requirement and based on the above-mentioned templates.

A cause event instance 610 represents "the stacking state of the cartons and the pallets changes to the side-by-side state of the cartons and the pallets", a first effect event instance 620 represents "the grabbing program uses the first robot", a second effect event instance 630 represents "the grabbing program includes the grabbing function block", and a third effect event instance 640 represents "the grabbing program creates the grabbing automation project including the controller-controlled displacement calculation module and the controller-controlled gripper control module".

Specifically, as shown in FIG. 3, a grabbing material flow 400 includes a grabbing procedure 500. The grabbing procedure 500 serves as a common parent node instance for a cause event instance 610 and its three effect event instances. The grabbing procedure 500 includes a pre-grabbing state and a post-grabbing state. The grabbing procedure 500 applies a grabbing process 660 and implements a grabbing program. The cause event instance 610 includes the following plurality of entities and their mutual relationship: the pre-grabbing state includes a stacking relationship, the post-grabbing state includes a side-by-side relationship, the stacking relationship includes cartons and pallets, and the side-by-side relationship includes the cartons and the pallets. The first effect event instance 620 includes the following plurality of entities and their mutual relationship: a grabbing program uses a grabbing robot. The second effect event instance 630 includes the following plurality of entities and their mutual relationship: the grabbing program includes a grabbing function block. The third effect event instance 640 includes the following plurality of entities and their mutual relationship: the grabbing program creates a grabbing automation project; the grabbing automation project includes a first controller, a displacement calculation module, a second controller, and a gripper control module; the first controller controls the displacement calculation module; and the second controller controls the gripper control module.

In addition, this embodiment further includes an initial state instance or material relationship instance 650 that is not under the same common parent node as the cause event instance 610, the first effect event instance 620, the second effect event instance 630, and the third effect event instance 640. Its entities include a pre-movement state and a front-and-back relationship, where the pre-movement state includes the front-and-back relationship and the side-by-side relationship in the cause event instance 610.

Each class is a sampling space, and its individuals are sampling points in these spaces. An event is a group of individuals included in the class. Therefore, in the present invention, corresponding classes can be selected according to user requirements to generate an event graph. Based on the user requirements, the present invention can define a correlation between event samples by setting a common node, because correlation information of the event samples does not need to be provided by a semantic network. If two event samples do not have a common parent node, they are not correlated.

Specifically, entity classes are selected based on the user requirements to define events, and to define causality between a cause event and an effect event. A common parent node is selected to define a relationship between a cause event and an effect event.

In addition, as required, the user may further input an initial probability between a cause event and an effect event based on expertise or existing data. For example, a probability that the cause event instance 610 is caused by the first effect event instance 620 is 23%, a probability that the cause event instance is caused by the second effect event instance 630 is 10%, and a probability that the cause event instance 610 is caused by the third effect event instance 640 is 52%. The above initial probabilities may be encoded as parameters into causal edges.

Preferably, step S1 further includes the following step: removing instances having no common parent node. In this embodiment, the initial state instance or material relationship instance 650 that is not under the same common parent node as the cause event instance 610, the first effect event instance 620, the second effect event instance 630, and the third effect event instance 640 is removed.

Further, step S1 further includes the following steps: extracting a plurality of entities from a knowledge base to generate the at least one cause event instance and the plurality of corresponding effect event instances thereof and to form a knowledge graph according to the user requirements and based on the cause event template and the effect event template, and assigning the plurality of entities of each cause event instance or effect event instance to the parent node, where the cause event instance or the effect event instance includes the plurality of entities and the mutual relationship between the entities. For example, FIG. 3 is a complete knowledge graph.

Then, step S2 is performed, in which a probability of a cause event instance or an effect event instance having a common parent node is calculated, where a probability that a first cause event instance causes a first effect event instance is:

$$P\big(RE1(R)\big|CE1(C)\big) = \frac{P\big(CE1(R)\big|RE1(C)\big) \cdot P\big(RE1(R)\big)}{P\big(CE1(C)\big)}$$

where $P(CE1(R) | RE1(C))$ represents a probability of the first cause event occurring when the first effect event occurs, $P(RE1(R))$ represents a probability of the first effect event occurring among all effect events, and $P(CE1(C))$ represents a probability of the first cause event occurring among all cause events. Step S2 further includes the following step: classifying all cause event instances and effect event instances. For example, in the following embodiment, they are classified into a first-class cause event, a first-class effect event, a second-class effect event, and so on.

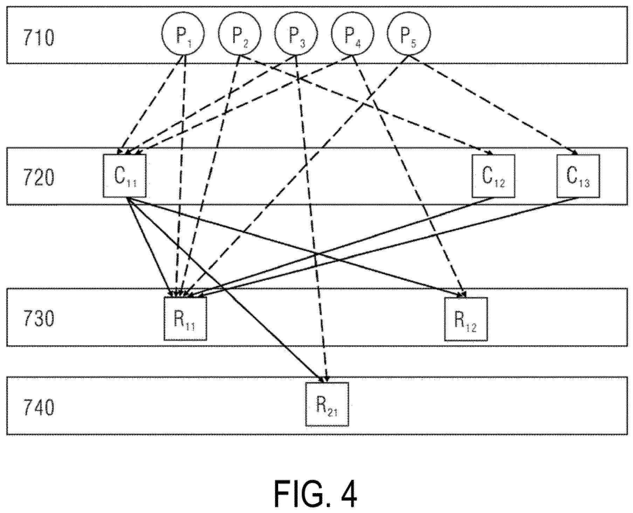

As shown in FIG. 4, according to another specific embodiment of the present invention, a first-class cause event 720 includes boiler damage $C_{11}$, insufficient power supply $C_{12}$, and insufficient inventory $C_{13}$. A first-class effect event 730 includes stopping the pipeline $R_{11}$ and stopping the shipping $R_{12}$. A second-class effect event 740 includes shutdown $R_{21}$. The solid arrows in FIG. 4 represent "causes", that is, the cause event causes the effect event. Specifically, the first-class cause event "boiler damage $C_{11}$" may cause the first-class effect events "stopping the pipeline $R_{11}$" and "stopping the shipping $R_{12}$" and the second-class effect event "shutdown $R_{21}$". The first-class cause event "insufficient power supply $C_{12}$" may cause the first-class effect event "stopping the pipeline $R_{11}$". The first-class cause event "insufficient inventory $C_{13}$" may cause "stopping the pipeline $R_{11}$". The dashed arrows in FIG. 4 represent a common parent node. For example, "Wuhan factory $P_1$" is a common parent node of the first-class cause event "boiler damage $C_{11}$" and the first-class effect event "stopping the pipeline $R_{11}$". "Shanghai factory $P_2$" is a common parent node of the first-class effect event "stopping the pipeline $R_{11}$" and the first-class cause event "insufficient power supply $C_{12}$". "Beijing factory $P_3$" is a common parent node of the first-class cause event "boiler damage Cn"and the second-class effect event "shutdown $R_{21}$". "Xi' an factory $P_4$" is a common parent node of the first-class cause event "boiler damage $C_{11}$" and the first-class cause event "stopping the shipping $R_{12}$". "Chengdu factory $P_5$" is a common parent node of the first-class effect event "stopping the pipeline $R_{11}$" and the first-class cause event "insufficient inventory $C_{12}$". Therefore, the entire graph is layered and classified according to a common parent node layer, a first-class cause event layer, a first-class effect event layer, and a second-class effect event layer.

FIG. 4 is converted into Table 1 of connection event samples as follows:

| Common parent node | Cause event sample | Effect event sample |
|---|---|---|
| $P_1$ | $C_{11}$ | $R_{11}$ |
| $P_2$ | $C_{12}$ | $R_{12}$ |
| $P_3$ | $C_{11}$ | $R_{21}$ |
| $P_4$ | $C_{11}$ | $R_{11}$ |
| $P_5$ | $C_{13}$ | $R_{11}$ |

The above cause event sample needs to have a corresponding common parent node with the effect event sample, and the common parent node is to be used as an index for calculating the samples, and initializes calculation of a probability between the cause event sample and the effect event sample.

Specifically, in FIG. 4, there are five common child nodes, three cause event samples ($C_{11}$, $C_{12}$, $C_{13}$), two first-class effect event samples ($R_{11}$, $R_{12}$), and one second-class effect event sample ($R_{21}$). As shown in Table 1, a probability of boiler damage $C_{11}$ and stopping the pipeline $R_{11}$ is expressed as:

$$P\big(RE1(R_{11})\big|CE1(C_{11})\big) = \frac{P\big(CE1(R_{11})\big|RE1(C_{11})\big) \cdot P\big(RE1(R_{11})\big)}{P\big(CE1(C_{11})\big)}$$

Therefore, it can be easily calculated from Table 1:

$$P\big(RE1(R_{11})\big|CE1(C_{11})\big) = \frac{{}^2\!/_3 \cdot {}^3\!/_5}{{}^3\!/_5} = \frac{2}{3}$$

A second aspect of the present invention provides a semantic-based causal event probability analysis apparatus, including: a generation apparatus for generating at least one cause event instance and a plurality of corresponding effect event instances thereof according to user requirements and based on a cause event template and an effect event template, and assigning each cause event instance or effect event instance to a parent node, where the cause event instance or the effect event instance includes a plurality of entities and a mutual relationship between the entities; and a calculation apparatus for calculating a probability of a cause event instance or an effect event instance having a common parent node, where a probability that a first cause event instance causes a first effect event instance is:

$$P\big(RE1(R)\big|CE1(C)\big) = \frac{P\big(CE1(R)\big|RE1(C)\big) \cdot P\big(RE1(R)\big)}{P\big(CE1(C)\big)}$$

where $P\,(CE1\,(R)\,|\,RE1\,(C))$ represents a probability of the first cause event occurring when the first effect event occurs, $P(RE1(R))$ represents a probability of the first effect event occurring among all effect events, and $P(CE1(C))$ represents a probability of the first cause event occurring among all cause events.

Further, the generation apparatus is further configured to: remove instances having no common parent node.

Further, the generation apparatus is further configured to: extract a plurality of entities from a knowledge base to generate the at least one cause event instance and the plurality of corresponding effect event instances thereof and to form a knowledge graph according to the user requirements and based on the cause event template and the effect event template, and assign the plurality of entities of each cause event instance or effect event instance to the parent node, where the cause event instance or the effect event instance includes the plurality of entities and the mutual relationship between the entities.

Further, entities of the cause event template include an initial state, an end state, a material relationship, and a material.

Further, entities of the effect event template include an application program, a function module, an execution apparatus, a project, and a module.

Further, the calculation apparatus is further configured to: classify all cause event instances and effect event instances.

A third aspect of the present invention provides a semantic-based causal event probability analysis system, including: a processor; and a memory coupled to the processor, where the memory stores instructions that, when executed by the processor, cause the electronic device to perform the actions including: S1. generating at least one cause event instance and a plurality of corresponding effect event instances thereof according to user requirements and based on a cause event template and an effect event template, and assigning each cause event instance or effect event instance to a parent node, where the cause event instance or the effect event instance includes a plurality of entities and a mutual relationship between the entities; and S2. calculating a probability of a cause event instance or an effect event instance having a common parent node, where a probability that a first cause event instance causes a first effect event instance is:

$$P\big(RE1(R)\big|CE1(C)\big) = \frac{P\big(CE1(R)\big|RE1(C)\big) \cdot P\big(RE1(R)\big)}{P\big(CE1(C)\big)}$$

where $P\,(CE1\,(R)\,|\,RE1\,(C))$ represents a probability of the first cause event occurring when the first effect event occurs, $P(RE1(R))$ represents a probability of the first effect event occurring among all effect events, and $P(CE1(C))$ represents a probability of the first cause event occurring among all cause events.

A fourth aspect of the present invention provides a computer program product tangibly stored on a computer-readable medium and including computer executable instructions that, when executed, cause at least one processor to perform the method according to the first aspect of the present invention.

A fifth aspect of the present invention provides a computer-readable medium storing computer executable instructions that, when executed, cause at least one processor to perform the method according to the first aspect of the present invention.

The present invention can reuse a dynamic semantic description of entities and their mutual relationship to automatically generate events and their causality, which reduces costs compared to generating a completely different causality in a network alone. In the present invention, causality estimation based on an existing semantic description is also more efficient. Because both description methods use the same data set, memory requirements are lowered.

The semantic-based causal event probability analysis mechanism provided in the present invention converts a static entity relationship into a causal probability, which represents a probability that a specific cause event causes a specific effect event. Causality is directly converted from the semantic description. Therefore, the present invention can convert all existing semantic networks into causal event networks.

Although the content of the present invention has been described in detail in the preferred embodiments above, it should be appreciated that the description above should not be considered as a limitation on the present invention. Various modifications and substitutions to the present invention will be apparent after perusal of the content above by those skilled in the art. Thus, the scope of protection of the present invention should be defined by the appended claims. Moreover, any of the reference numerals in the claims shall not be construed as limiting the claims concerned. The term "include/comprise" does not exclude other apparatuses or steps not listed in the claims or the description. The terms "first", "second", etc., are only used to refer to names, and do not denote any particular order.

**Claims**

1. A semantic-based causal event probability analysis method, comprising the following steps:

   S1. generating at least one cause event instance and a plurality of corresponding effect event instances thereof according to user requirements and based on a cause event template and an effect event template, and assigning each cause event instance or effect event instance to a parent node, wherein the cause event instance or the effect event instance comprises a plurality of entities and a mutual relationship between the entities; and
   S2 . calculating a probability of a cause event instance or an effect event instance having a common parent node, wherein a probability that a first cause event instance causes a first effect event instance is:

$$P\big(RE1(R)\big|CE1(C)\big) = \frac{P\big(CE1(R)\big|RE1(C)\big) \cdot P\big(RE1(R)\big)}{P\big(CE1(C)\big)}$$

   wherein $P(CE1 (R) |RE1 (C))$ represents a probability of the first cause event occurring when the first effect event occurs, $P (RE1 (R) )$ represents a probability of the first effect event occurring among all effect events, and $P(CE1(C))$ represents a probability of the first cause event occurring among all cause events.

2. The semantic-based causal event probability analysis method as claimed in claim 1, **characterized in that** step S1 further comprises the following step:
   removing instances having no common parent node.

3. The semantic-based causal event probability analysis method as claimed in claim 1, **characterized in that** step S1 further comprises the following step:
   extracting a plurality of entities from a knowledge base to generate the at least one cause event instance and the plurality of corresponding effect event instances thereof and to form a knowledge graph according to the user requirements and based on the cause event template and the effect event template, and assigning the plurality of entities of each cause event instance or effect event instance to the parent node, wherein the cause event instance or the effect event instance comprises the plurality of entities and the mutual relationship between the entities.

4. The semantic-based causal event probability analysis method as claimed in claim 1, **characterized in that** entities of the cause event template comprise an initial state, an end state, a material relationship, and a material.

5. The semantic-based causal event probability analysis method as claimed in claim 1, **characterized in that** entities of the effect event template comprise an application program, a function module, an execution apparatus, a project, and a module.

6. The semantic-based causal event probability analysis method as claimed in claim 1, **characterized in that** step S2 further includes the following steps:
   classifying all cause event instances and effect event instances.

7. A semantic-based causal event probability analysis apparatus, comprising:

   a generation apparatus for generating at least one cause event instance and a plurality of corresponding effect event instances thereof according to user requirements and based on a cause event template and an effect event template, and assigning each cause event instance or effect event instance to a parent node, wherein the cause event instance or the effect event instance comprises a plurality of entities and a mutual relationship between the entities; and
   a calculation apparatus for calculating a probability of a cause event instance or an effect event instance having a common parent node, wherein a probability that a first cause event instance causes a first effect event instance is:

$$P\big(RE1(R)\big|CE1(C)\big) = \frac{P\big(CE1(R)\big|RE1(C)\big) \cdot P\big(RE1(R)\big)}{P\big(CE1(C)\big)}$$

wherein $P$ ($CE1$ ($R$) $|RE1$ ($C$)) represents a probability of the first cause event occurring when the first effect event occurs, $P$ ($RE1$ ($R$) ) represents a probability of the first effect event occurring among all effect events, and $P(CE1(C))$ represents a probability of the first cause event occurring among all cause events.

8. The semantic-based causal event probability analysis method as claimed in claim 7, **characterized in that** the generation apparatus is further configured to:
   remove instances having no common parent node.

9. The semantic-based causal event probability analysis method as claimed in claim 7, **characterized in that** the generation apparatus is further configured to:
   extract a plurality of entities from a knowledge base to generate the at least one cause event instance and the plurality of corresponding effect event instances thereof and to form a knowledge graph according to the user requirements and based on the cause event template and the effect event template, and assign the plurality of entities of each cause event instance or effect event instance to the parent node, wherein the cause event instance or the effect event instance comprises the plurality of entities and the mutual relationship between the entities.

10. The semantic-based causal event probability analysis method as claimed in claim 7, **characterized in that** entities of the cause event template comprise an initial state, an end state, a material relationship, and a material.

11. The semantic-based causal event probability analysis method as claimed in claim 7, **characterized in that** entities of the effect event template comprise an application program, a function module, an execution apparatus, a project, and a module.

12. The semantic-based causal event probability analysis method as claimed in claim 7, **characterized in that** the calculation apparatus is further configured to:
    classify all cause event instances and effect event instances.

13. A semantic-based causal event probability analysis system, comprising:

    a processor; and
    a memory coupled to the processor, wherein the memory stores instructions that, when executed by the processor, cause the electronic device to perform actions comprising:

    S1. generating at least one cause event instance and a plurality of corresponding effect event instances thereof according to user requirements and based on a cause event template and an effect event template, and assigning each cause event instance or effect event instance to a parent node, wherein the cause event instance or the effect event instance comprises a plurality of entities and a mutual relationship between the entities; and
    S2 . calculating a probability of a cause event instance or an effect event instance having a common parent node, wherein a probability that a first cause event instance causes a first effect event instance is:

$$P\big(RE1(R)\big|CE1(C)\big) = \frac{P\big(CE1(R)\big|RE1(C)\big) \cdot P\big(RE1(R)\big)}{P\big(CE1(C)\big)}$$

wherein $P$ ($CE1$ ($R$) $|RE1$ ($C$) ) represents a probability of the first cause event occurring when the first effect event occurs, $P$ ($RE1$ ($R$) ) represents a probability of the first effect event occurring among all effect events, and $P(CE1(C))$ represents a probability of the first cause event occurring among all cause events.

14. A computer program product tangibly stored on a computer-readable medium and comprising computer executable instructions that, when executed, cause at least one processor to perform the method as claimed in any one of claims 1 to 6.

15. A computer-readable medium storing computer executable instructions that, when executed, cause at least one processor to perform the method as claimed in any one of claims 1 to 6.

```
      ┌─────────────┐
      │    Start    │
      └──────┬──────┘
             │
             ▼
      ┌─────────────┐
      │     S₁      │
      └──────┬──────┘
             │
             ▼
      ┌─────────────┐
      │     S₂      │
      └──────┬──────┘
             │
             ▼
      ┌─────────────┐
      │     End     │
      └─────────────┘
```

# FIG. 1

Material flow — 100

includes

Procedure — 200

applies → Process — 350

applies

applies

End state

Initial state

includes

includes → Material relationship — 310

includes → Material

implements

uses

Application program

includes → Function module — 320

Execution apparatus — 330

creates

creates

Project

creates → Module

creates

creates

Control apparatus — 340

FIG. 2

FIG. 3

EP 4 145 301 A1

13

FIG. 4

## INTERNATIONAL SEARCH REPORT

| International application No. |
| --- |
| **PCT/CN2020/099505** |

**A.    CLASSIFICATION OF SUBJECT MATTER**

G06F 16/36(2019.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI: 图谱, 事理, 事件, 因果, 单向, 定向, 概率, 语义, 知识库, 模板, 规则, 父节点, pattern, map, event, reason, causal, result, knowledge, probability, correlation, directional, semantic, rule, template, parent, node

**C.    DOCUMENTS CONSIDERED TO BE RELEVANT**

| Category* | Citation of document, with indication, where appropriate, of the relevant passages | Relevant to claim No. |
| --- | --- | --- |
| A | 单晓红 等 (SHAN, Xiaohong et al.). "基于事理图谱的网络舆情演化路径分析--以医疗舆情为例 (Analysis on the Evolution Path of Internet Public Opinions Based on the Event Evolution Graph: Taking Medical Public Opinions as an Example)" 情报理论与实践 (Information Studies:Theory & Application), Vol. 42, No. 9, 30 September 2019 (2019-09-30), ISSN: 1000-7490, main body, sections 1-2, and figure 1 | 1-15 |
| A | CN 109726293 A (DATA HORIZON (GUANGZHOU) TECHNOLOGY CO., LTD.) 07 May 2019 (2019-05-07) entire document | 1-15 |
| A | CN 110909992 A (BEIJING MININGLAMP SOFTWARE SYSTEM CO., LTD.) 24 March 2020 (2020-03-24) entire document | 1-15 |
| A | US 2019266506 A1 (INTERNATIONAL BUSINESS MACHINES CORP.) 29 August 2019 (2019-08-29) entire document | 1-15 |

☑ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 March 2021** | **30 March 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/099505**

**C.    DOCUMENTS CONSIDERED TO BE RELEVANT**

| Category* | Citation of document, with indication, where appropriate, of the relevant passages | Relevant to claim No. |
|---|---|---|
| A | CN 110309313 A (BEIJING GRIDSUM TECHNOLOGY CO., LTD.) 08 October 2019 (2019-10-08) entire document | 1-15 |

Form PCT/ISA/210 (second sheet) (January 2015)

**INTERNATIONAL SEARCH REPORT**
Information on patent family members

International application No.

**PCT/CN2020/099505**

| Patent document cited in search report | | | Publication date (day/month/year) | Patent family member(s) | Publication date (day/month/year) |
|---|---|---|---|---|---|
| CN | 109726293 | A | 07 May 2019 | None | |
| CN | 110909992 | A | 24 March 2020 | None | |
| US | 2019266506 | A1 | 29 August 2019 | None | |
| CN | 110309313 | A | 08 October 2019 | None | |

Form PCT/ISA/210 (patent family annex) (January 2015)